# EUROPEAN PATENT SPECIFICATION

(11) **EP 3 354 775 B1**
(45) Date of publication and mention of the grant of the patent: **27.11.2019**
(21) Application number: 18153522.0
(22) Date of filing: 25.01.2018
(51) Int. Cl.: D01H 1/32, D01H 4/42, D01H 13/14

(54) **SPINNING MACHINE WITH ELECTRONIC APPARATUS FOR PROVIDING THE SPINNING MACHINE WITH AC BACKUP POWER SUPPLY IN THE CASE OF AN OUTAGE OF AC POWER SUPPLY**
SPINNMASCHINE MIT ELEKTRONISCHEM GERÄT ZUR VERFÜGUNG DER SPINNMASCHINE MIT AC-BACKUP-STROMVERSORGUNG IM FALL EINES AUSGANGS DER STROMVERSORGUNG
MACHINE À FILER AVEC UN APPAREIL ÉLECTRONIQUE POUR FOURNIR À LA MACHINE À FILER UNE ALIMENTATION DE COURANT DE SECOURS AC EN CAS DE PANNE D'ALIMENTATION DE COURANT

(30) Priority: 31.01.2017 IT 201700010272
(43) Date of publication of application: 01.08.2018
(73) Proprietor: Savio Macchine Tessili S.p.A., 33170 Pordenone (IT)
(72) Inventor: ONDREJ, Hejda, 33170 Pordenone (IT); PAVEL, Strof, 33170 Pordenone (IT); VACLAV, Simek, 33170 Pordenone (IT); LADISLAV, Tyls, 33170 Pordenone (IT); COLUSSI, Vittorio, 33170 Pordenone (IT)
(74) Representative: Mozzi, Matteo

(56) References cited:
- EP-A1- 0 526 404
- EP-A1- 0 985 753
- EP-A2- 1 479 800

## Description

### Field of the invention

The present invention relates to the field of spinning textile machines, and in particular to a spinning textile machine with an electronic apparatus for providing the spinning textile machine with AC backup power supply in the case of an outage of AC power supply and a method for providing a spinning textile machine with AC backup power supply in the case of an outage of AC power supply.

### Background of the art

In order to reduce losses in the textile manufacturing performed by a spinning textile machine, it is felt the need to provide a spinning machine with an AC backup power supply in the case of a short-term outage of AC power supply.

In fact, even if the failover can be approximately of few seconds, it is very important to avoid the stop of the spinning textile machine because the re-start of the machine could be required a lot of time.

In addition, in the case of longer failover, it is also felt the need to ensure, during permanent outage of the power supply, the management of the spinning textile machine in order to stop and subsequently re-start it, in a way as much as possible reliable and secure.

In this regard, nowadays, there are known technical solutions for providing a spinning textile machine with AC backup power supply in the case of an outage of the AC power supply.

According to a first solution belonging to the prior art, a DC electrical bus of a spinning textile machine is connected to the AC power supply grid via a transformer and a rectifier.

The transformer and the rectifier are arranged to receive an AC power supply from the power supply grid, to rectify it and to provide the backup batteries of the spinning textile machine with a DC power supply.

In the case of outage of the AC power supply provided by the AC power supply grid, the backup batteries are then able to provide the spinning textile machine with AC backup power supply while the spinning textile machine operates until the end of the controlled deceleration of the motors of the spinning textile machine.

This first solution has several disadvantages, e.g.:
- lower efficiency of the transformer with respect to the switching of the AC power supply so that it is impossible to control the desired DC output voltage depending on the load (in fact, a higher load causes a higher voltage drop);
- high costs due to the large cross section of bus cables to be employed;
- low life of the backup batteries;
- increasing of the costs due to the use of additional overvoltage protection devices in order to avoid the destruction of electrical components in a safe voltage of the spinning textile machine since an electronic device can be used for maintaining the backup batteries in a charged state and overvoltage of the AC power supply provided by the AC power supply grid can occur.

According to a second solution belonging to the prior art (e.g. see EP-A-1 479 800, EP-A-0 526 404 or EP-A-0 985 753), a DC electrical bus of a spinning textile machine is connected to a DC source DC link inverter (DC link) to provide the spinning textile machine with DC power supply, with voltage level of at least hundreds of volts.

The voltage of power supply provided by the DC source DC link inverter is supplied to one or more DC/DC converters having an output target voltage value.

In the case of an outage of the power supply, inertial kinetic energy generated by the motor drive of the spinning textile machine during deceleration is recovered to be provided to the spinning textile machine.

In this regard, the inertial kinetic energy generated by the motor drive of the spinning textile machine is provided to the DC source DC link inverter to generate a voltage which is converted by one or more DC/DC converters into the set output target voltage value.

Thus, the set output target voltage value keeps in operation the spinning textile machine until the motor drive stop.

This second solution has also several disadvantages, e.g.:
- high cost due to the presence of one or more DC/DC converters;
- limited lifetime and failure of DC/DC converters; - additional costs due to the need to cover the DC electrical bus in order to improve the electrical safety, since the DC electrical bus works with high (and dangerous) voltages (from 400V to 700V).

The above mentioned technical solutions belonging to the prior art have sophisticated arrangement and therefore they are relatively expensive.

It is the object of the present invention to provide a spinning textile machine with electronic apparatus for providing the spinning textile machine with AC backup power supply in the case of an outage of AC power supply which allows to obviate at least partially the drawbacks complained about previously with reference to the prior art and in particular which is as much as possible simple, functional, reliable and manufacturable saving costs.

Such an object is achieved by a spinning textile machine according to claim 1.

The present invention also relates to a method for providing a spinning textile machine with AC backup power supply in the case of an outage of AC power supply.

### Brief description of the drawings

Further features and advantages of the spinning textile machine according to the present invention will become apparent in the following description which shows preferred embodiments, given by way of indicative, nonlimiting examples, with reference to the accompanying drawings, in which:
- figure 1 schematically shows, by means of a block chart, a spinning textile machine with electronic apparatus for providing the spinning textile machine with AC backup power supply in the case of an outage of AC power supply, according to an embodiment of the present invention;
- figure 2 diagrammatically shows, by means of an electrical chart, an electronic apparatus for providing a spinning textile machine with AC backup power supply in the case of an outage of AC power supply, according to an embodiment of the present invention;
- figure 3 diagrammatically shows, by means of a block chart, the electronic apparatus for providing a spinning textile machine with AC backup power supply in the case of an outage of AC power supply, according to the embodiment of figure 2, and

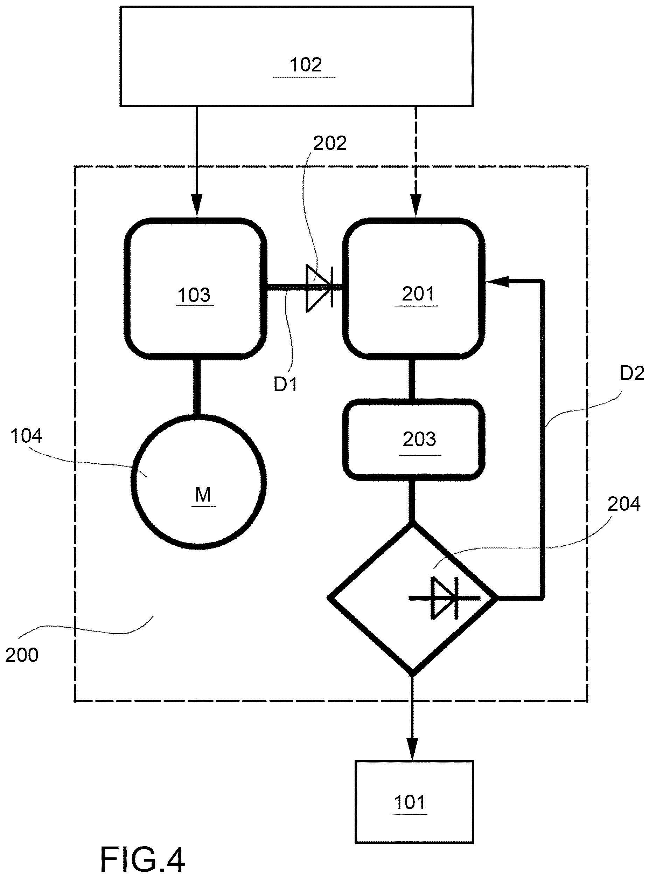

- figure 4 diagrammatically shows, by means of a block chart, an electronic apparatus for providing a spinning textile machine with AC backup power supply in the case of an outage of AC power supply, according to the further embodiment of the invention.

### Detailed description

With reference to the aforesaid figures, according to the present invention, it will now be described a spinning textile machine with electronic apparatus for providing the spinning textile machine with AC backup power supply in the case of an outage of AC power supply, for the sake of brevity also simply spinning textile machine or machine, which has been generally indicated by the reference numeral 100.

It is worth noting that equivalent or similar elements are indicated by the same reference numeral in the aforesaid figures.

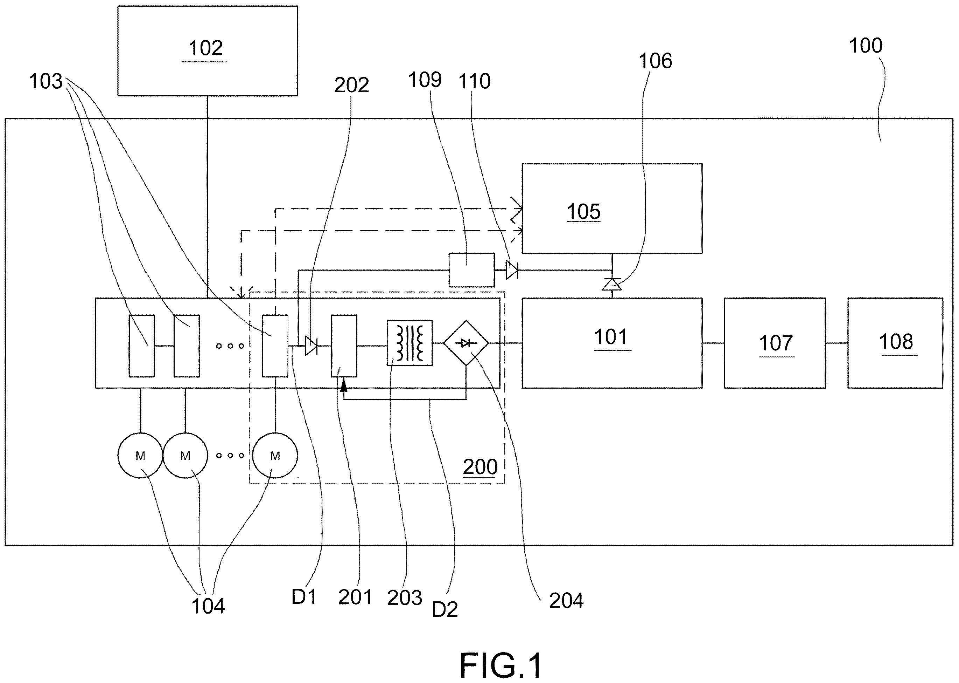

The spinning textile machine 100 comprises a DC (Direct-current) power supply bus bar 101 (with a safe voltage level), schematically illustrated in the figure 1 with a block.

The DC power supply bus bar 101 is configured to provide a safe voltage level.

As an example, the DC power supply bus bar 101 is configured to provide the electric components of spinning textile machine 100 with a DC power supply having the set electric safe voltage level, e.g. 24 V.

The spinning textile machine 100 further comprises an electronic apparatus 200 arranged to electrically connect the DC power supply bus bar 101 to a AC power supply grid 102. As an example, the AC power supply grid 102 can be of the three phase type.

It should be noted that the electronic apparatus 200 is arranged to provide the spinning textile machine 100 with AC (alternating-current) backup power supply also in the case of an outage of AC power supply provided by the AC power supply grid 102.

In fact, in the case of no outage of AC power supply provided by the AC power supply grid 102, the electronic apparatus 200 is configured to simply provide the spinning textile machine 100 with the AC power supply as provided by the AC power supply grid.

With reference to the embodiment of figure 1, the spinning textile machine 100 further comprises a plurality of frequency inverter modules 103 electrically connected to the AC power supply grid 102.

Each of the frequency inverter module 103 is a frequency inverter for AC drives.

The spinning textile machine 100 further comprises a plurality of sources of kinetic energy 104.

Each source of kinetic energy, indicated also with the reference M, of said plurality of sources of kinetic energy 104 is electrically connected to a relative frequency inverter module 103 of said plurality of frequency inverter modules 103.

During the operation of the spinning textile machine 100, in the case of no outage of the AC power supply provided by the AC power supply grid 102, each source of kinetic energy M of the plurality of sources of kinetic energy 104 is power supplied by the AC power supply grid via the relative frequency inverter module 103 of the plurality of frequency inverter module 103.

The electronic apparatus 200 comprises a first frequency inverter module 103 of said plurality of frequency inverter modules 103.

As mentioned above, also the first inverter module 103 can be a frequency inverter for AC drives.

The electronic apparatus 200 comprises a source of kinetic energy M of said plurality of sources of kinetic energy 104.

The source of kinetic energy M is electrically connected to the first frequency inverter module 103.

It should be observed that the source of kinetic energy M is power supplied by the AC electric power grid 102 via the first frequency inverter module 103.

The electronic apparatus 200 further comprises a second frequency inverter module 201 electrically connected to the first frequency inverter module 103 via a first DC electrical link D1 comprising a first diode 202.

The second frequency inverter module 201 is power supplied by the first frequency inverter module 103 via the first DC electrical link D1 comprising the first diode 202.

It should be noted that the first diode 202 of the first DC electrical link D1 is configured to advantageously allow the transferring of DC power supply from the first frequency inverter module 103 to the second frequency inverter module 202 and to avoid the transferring of DC power supply from the second frequency inverter module 202 to the first frequency inverter module 103.

The electronic apparatus 200 further comprises a transformer module 203 and a rectifier module 204.

The transformer module 203 is electrically connected to the DC power supply bus bar 101 via the rectifier module 204.

The second frequency inverter module 201 is electrically connected to the DC power supply bus bar 101 via the transformer module 203 and the rectifier module 204.

The first frequency inverter module 103 is advantageously configured, in the case of an outage of the AC power supply provided by the AC power supply grid 102, to detect an outage of the AC power supply provided by the AC power supply grid 102.

In addition, the first frequency inverter module 103 is advantageously configured to receive a kinetic energy generated by the source of kinetic energy M as a AC backup power supply.

Therefore, the first frequency inverter module 103 is advantageously power supplied by the kinetic energy received by the source of kinetic energy M.

In fact, in the case of an outage of the AC power supply, the source of kinetic energy M, during deceleration due to the loss of AC power supply received by the AC power supply grid via the first frequency inverter module 103, is configured to produce kinetic energy until the source of kinetic energy M stops and the deceleration is null.

The first frequency inverter module 103 is advantageously configured provide, via the first DC electrical link D1 comprising the first diode 202, the second frequency inverter module 201 with the AC backup power supply received from the source of kinetic energy M.

Therefore, in the case of an outage of the AC power supply, also the second frequency inverter module 201 is advantageously power supplied by the kinetic energy generated by the source of kinetic energy M.

In other words, in the case of an outage of the AC power supply, the first frequency inverter module 103 is configured to switch into an AC backup power supply generator mode.

According to an embodiment, in combination with the embodiments previously described, the first frequency inverter module 103 is further configured to provide the second frequency inverter module 201 of the electronic apparatus 200 with a DC power supply also in the case of no outage of the AC power supply, via the first DC electrical link D1 comprising the first diode 202, during the normal operation of the spinning textile machine 100.

According to an embodiment, alternative to the embodiment previously described, the second frequency inverter module 201 of the electronic apparatus 200 is electrically connected to the AC power supply grid 102.

The second frequency inverter module 201 of the electronic apparatus 200 is power supplied by the AC power supply grid 102 during the normal operation of the spinning textile machine 100.

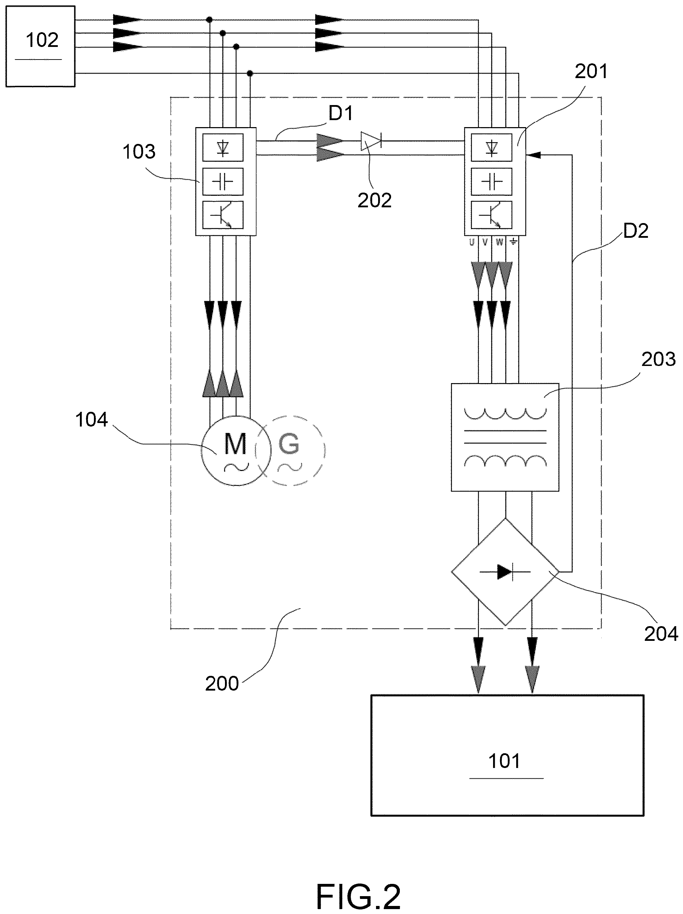

According to an embodiment, shown in figures 1, 2 e 4, in combination with any embodiment previously described, the electronic apparatus 200 comprises a second feedback DC electrical link D2.

The rectifier 204 is electrically connected to the second frequency inverter module 201 via the feedback DC electrical link D2.

The feedback DC electrical link D2 advantageously allows to provide the second frequency inverter module 201 with information representative of the real output voltage level of the DC power supply to be provided to the DC power supply bus bar 101 on the basis of the real load. In fact, the control of the output voltage level of the DC power supply depends on the load.

On the basis of such information, the second frequency inverter module 201 can be configured to generate a correction of the output voltage level of the DC power supply and the frequency of the transformer module 203 (primary winding).

The advantages of this embodiment are then to define and control the output voltage level of the DC power supply to be provided to the DC power supply bus bar 101 and, in case of the overvoltage from the AC power grid 102, to guarantee a safe output voltage level.

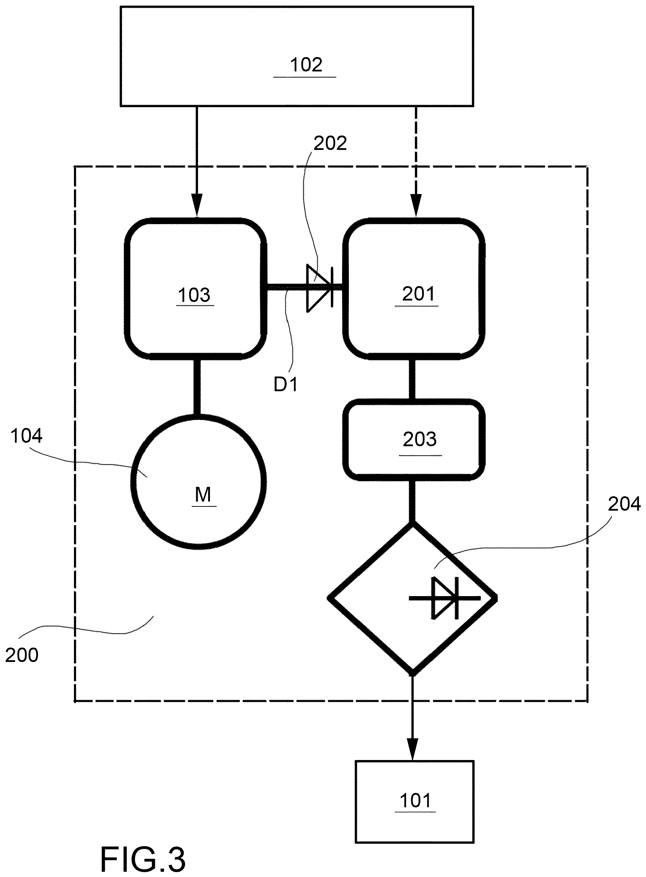

It should be noted that, according to another embodiment, shown in figure 3 and alternatively to the embodiment previously described, the electronic apparatus 200 cannot be provided without the second feedback DC electrical link D2.

According to an embodiment, in combination with any embodiment previously described, the first frequency inverter module 103 is of the three phase type.

According to an embodiment, in combination with any embodiment previously described, the second frequency inverter module 201 is of the three phase type.

According to an embodiment, in combination with any embodiment previously described, each of the frequency inverter module of the plurality of frequency inverter modules 103 is of the three phase type.

According to an embodiment, in combination with any embodiment previously described, the source of kinetic energy M electrically connected to the first frequency inverter module 103 is one of a motor drive, a fan drive, a rotary machine drive.

Turning to the embodiment of figure 1, to be considered in any case in combination with any embodiment previously described, the spinning textile machine 100 further comprises a data processing unit 105, e.g. industrial PC, a power panel, a PLC, a microprocessor or a microcontroller, having a relative memory unit, electrically connected to the DC power supply bus bar 101 via a second diode 106.

It should be noted that the second diode 106 advantageously avoids the transferring of power energy from the power supply source 109 to the DC power supply bus bar 101.

The data processing unit 105 is configured to control the operation of the spinning textile machine 100.

In a great detail, the data processing unit 105 is configured to control the plurality of frequency inverter module 103, e.g. it is configured to control the start function and the stop function of each frequency inverter module.

However, it should be noted that the data processing unit 105 is not configured to control the AC power supply of the spinning textile machine 100, with the exception of the case in which an emergency stop is required.

In this regard, the data processing unit 105 is configured to send safety electrical signal to the plurality of frequency inverter modules 103 to deadlock of output of each frequency inverter module to prevent movement of the drives.

On the contrary, in the case of an outage of AC power supply, the control of the AC power supply is demanded to the first frequency inverter module 103 of the electronic apparatus 200, as previously described.

In this regard, according to an embodiment, the first frequency inverter module 103 is configured to generate an electric signal representative of the detected outage of AC power supply.

The first frequency inverter module 103 is further configured to provide the data processing unit 105 with said electrical signal representative of the detected outage of AC power supply.

According to the embodiment of figure 1, the spinning textile machine further comprises a plurality of electronic boards 107 electrically connected to the DC power supply bus bar 101.

According to some examples, the plurality of electronic boards 107 may comprise a spinning position board or section board comprising a plurality of inputs and outputs to control electromechanical elements as electromagnets, electromagnetic valves and so on and to read input values from induction sensors, magnetic Hall sensors and so on.

In addition, the plurality of electronic boards 107 may comprise driver boards for stepping motors, yarn breakage sensor, sensors of yarn cleaner, cleaner electronic boards and so on.

Other electronic boards can be comprised in the plurality of electronic boards 107, configured to execute several functions, e.g. sliver feeding by stepping motor, arm lifting, damping, arm releasing, quality controlling the quality of the yarn and so on.

The spinning textile machine 100 further comprises a plurality of stepping motor drives 108 electrically connected to the plurality of electronic boards 107.

As an example, a stepping motor drive can be a drive for sliver feeding, where the speed and direction of the movement is controlled in dependence of the desired yarn fineness and the twist of the yarn.

It should be noted that the control electrical signals of a stepping motor drive are adjusted for the process of the joining to optimize the quality of the joining area.

According to the embodiment of figure 1, the spinning textile machine 100 further comprises a DC/DC converter 109 electrically connected between the first DC electrical link D1, upstream the first diode 202, and the data processing unit 105.

A third diode 110 is arranged between the DC/DC converter 109 and the data processing unit 105.

It should be noted that the third diode 110 advantageously protects the output of the DC/DC converter 109 against reverse polarity.

According to a further embodiment, not shown in the figures, the third diode 110 may be integrated in the DC/DC converter 109.

According to another embodiment, an additional output protection for the DC/DC converter 109 can be provided.

The DC/DC converter 109 is configured to provide the data processing unit 105 with power supply to be provided to electric/electronic circuits of safety relays (not shows in the figures) and also to control relays (not shown in the figures) to be used in the case of the failure of second frequency inverter module 201.

According to another aspect of the present invention, a method for providing a spinning textile machine 100 with an AC backup power supply in the case of an outage of AC power supply is provided.

As previously described, the spinning textile machine 100 comprises an electronic apparatus 200 arranged to electrically connect a DC power supply bus bar 101 of the spinning textile machine 100 to a AC power supply grid 102.

The electronic apparatus 200 comprises:
- a first frequency inverter module 103 of a plurality of frequency inverter modules 103 of the spinning textile machine 100;
- a source of kinetic energy M of a plurality of sources of kinetic energy 104 of the spinning textile machine 100, said source of kinetic energy M being electrically connected to the first frequency inverter module 103, the source of kinetic energy M being power supplied by the AC electric power grid 102 via the first inverter module 103;
- a second frequency inverter module 201 electrically connected to the first frequency inverter module 103 via a first DC electrical link D1 having a first diode 202, the second frequency inverter module 201 being power supplied by the first frequency inverter module 103 via the first DC electrical link having the first diode 202;
- a transformer module 203 and a rectifier module 204, the transformer module 203 being electrically connected to the DC power supply bus bar 101 via the rectifier module 204, the second frequency inverter module 201 being electrically connected to the DC power supply bus bar 101 via the transformer module 203 and the rectifier module 204.

In the case of an outage of the AC power supply 102, the method comprises a step of recognizing, by the first frequency inverter module 103, the outage of the AC power supply by the AC power supply grid 102.

In addition, the method further comprises the step of receiving, by the first frequency inverter module 103, the kinetic power energy generated by the source of kinetic energy M as a AC backup power supply.

Furthermore, the method comprises the step of providing via the first DC electrical link D1 comprising the first diode 202, by the first frequency inverter module 103, the second frequency inverter module 201 with the AC backup power supply received from the source of kinetic energy M.

With reference to the embodiment of figure 1 and 2, the operation of the spinning textile machine 100, in the case of an outage of AC power supply provided by the AC power supply grid 102, is now described.

During the operation with normal conditions of the spinning textile machine 100, the plurality of frequency inverter module 103 is power supplied by the AC power supply grid 102.

It should be noted that no DC power supply is transferred from the first frequency inverter module 103 to the second frequency inverter module 201 via the first DC electrical link D1 comprising the first diode 202, during the operation under normal conditions of the spinning textile machine 100.

In the case of startup, the data processing unit 105 sends information to the plurality of frequency inverter module 103 in order to begin the process of textile manufacturing to be performed by the spinning textile machine 100.

Each source of kinetic energy of said plurality of sources of kinetic energy 104 (drive motors, fan motors or rotary machine motors) operates on the basis of set parameters.

Examples of set parameters are:
- speed of a stepping motor drive;
- output frequency of the inverters (speed);
- drive motion directions and so on;
- parameters for virtual axes which keep a stepping motor drive in same ratio of speed to keep same yarn count and keep the twist of yarn during the production;
- parameters for safety operation, detection overheating, overloaded, outage and so on;
- parameters representative to the values for drives like take up, winding, rotors, combing rollers, cleaning air fan, technological air fan and so on.

The transformer 203 with the rectifier module 204 of the electronic apparatus 200 converts the AC power supply received by the AC power supply grid 102 into DC power supply to be provided to the DC power supply bus bar 101, then to the electronic components of the spinning textile machine 100, i.e. the data processing unit 105, the plurality of electronic boards 107, the plurality of stepping motor drives 108, and plurality of sensors (not shown in the figures).

Examples of sensors are: induction sensors, magnetic Hall sensors, under-pressure sensors, yarn breakage sensors, yarn cleaner sensors and so on.

In the case of an outage of AC power supply, the first frequency inverter module 103 detect the outage of AC power supply and switches into a generator mode, as previously explained.

The source of kinetic energy M, during deceleration after the outage of the AC power supply, provides the first frequency inverter module 103 with kinetic energy as AC backup power supply.

The first frequency inverter module 103 provides the second frequency inverter module 201 with the AC backup power supply received from the source of kinetic energy M, via the first DC electrical link D1 comprising the first diode 202.

As previously mentioned, the first diode 202 avoids the transferring of energy from the second frequency inverter module 201 to the first frequency inverter module 103.

The kinetic energy as AC backup power supply continues to be generated by the source of kinetic energy M until the source of kinetic energy M completely stops.

It should be noted that the electronic components of the spinning textile machine 100 need only about 10s to control the stop.

In fact, after the stop signal the rotors drive start decelerate and others drives like winding, take up and sliver feeding keep the ratio to keep the process of spinning.

The process keeps the yarn count and twist of the yarn same.

The drives of winding, take up and sliver feeding stop in the specific time to achieve the desired length of the yarn inside the spinning unit.

The controlled stop saves start up time of the next startup of the spinning textile machine and therefore saves costs in the textile manufacturing performed by the spinning textile machine 100.

In fact, the ends of the yarn, prepared inside the spinning units, are able (with using adjusted start parameters for drives and sliver feeding) to join the end of the yarn to the spinning process.

Then the recovery of the production is very fast.

The spinning textile machine according to the present invention has several advantages.

First of all, the spinning textile machine is simple. In fact, a frequency inverter module for AC drives is used as a source for primary winding of the transformer module, then the rectifier bridge is connected directly via fuses to DC bus.

In addition, the spinning textile machine is functional. In fact, the recovery is provided by frequency inverter modules which integrate functions, transformer module and rectifier module which are basic and simple components with clear functionality.

Again, the spinning textile machine is reliable. In fact, the frequency inverter modules are suitable to be used in 3 phase industrial applications with long life in industrial environment. The transformer module and the rectifier module are not so critical components and while maintaining the operating conditions is also suitable for long life in operation.

Lastly, the spinning textile machine is saving costs because the recovery of the energy during deceleration is obtained and the short-term outage does not cause stop of the production of the spinning textile machine. In addition, a permanent outage stops machines in order and in state for fast start and fast recovery of production.

## Claims

1. A spinning textile machine (100) comprising:
- a DC power supply bus bar (101);
- an electronic apparatus (200) arranged to electrically connect the DC power supply bus bar (101) to an AC power supply grid (102), the electronic apparatus (200) being arranged to provide the spinning textile machine (100) with AC backup power supply also in the case of an outage of AC power supply provided by the AC power supply grid (102);
- a plurality of frequency inverter modules (103) electrically connected to the AC power supply grid (102);
- a plurality of sources of kinetic energy (104, M), each source of kinetic energy (M) of said plurality of sources of kinetic energy (104, M) being electrically connected to a relative inverter module (103) of said plurality of frequency inverter modules (103);
the electronic apparatus (200) comprises:
- a first frequency inverter module (103) of said plurality of frequency inverter modules (103);
- a source of kinetic energy (M) of said plurality of sources of kinetic energy (104, M), said source of kinetic energy (M) being electrically connected to the first frequency inverter module (103), the source of kinetic energy (M) being power supplied by the AC electric power grid (102) via the first frequency inverter module (103) ; **characterised in that** the electronic apparatus (200) further comprises:
- a second frequency inverter module (201) electrically connected to the first frequency inverter module (103) via a first DC electrical link (D1) comprising a first diode(202), the second frequency inverter module (201) being power supplied by the first frequency inverter module (103) via the first DC electrical link (D1) comprising the first diode(202);
- a transformer module (203) and a rectifier module (204), the transformer module (203) being electrically connected to the DC power supply bus bar (101) via the rectifier module (204), the second frequency inverter module (201) being electrically connected to the DC power supply bus bar (101) via the transformer module (203) and the rectifier module (204),
in the case of an outage of the AC power supply provided by the AC power supply grid (102), the first frequency inverter module (103) being configured to:
- detect an outage of the AC power supply by the AC power supply grid (102);
- receive a kinetic energy generated by the source of kinetic energy (M) as an AC backup power supply;
- provide, via the first DC electrical link (D1) comprising the first diode (202), the second frequency inverter module (201) with the AC backup power supply received from the source of kinetic energy (M).

2. The spinning textile machine (100) according to claim 1, wherein the first frequency inverter module (103) is further configured to provide the second frequency inverter module (201) of the electronic apparatus (200) with a DC power supply also in the case of no outage of the AC power supply, via the first DC electrical link (D1) comprising the first diode (202), during the normal operation of the spinning textile machine (100).

3. The spinning textile machine (100) according to claim 1, wherein the second frequency inverter module (201) of the electronic apparatus (200) is electrically connected to the AC power supply grid (102), the second frequency inverter module (201) of the electronic apparatus (200) being electrically supplied by the AC power supply grid (102) during the normal operation of the spinning textile machine (100).

4. The spinning textile machine (100) according to any of the preceding claims, wherein the electronic apparatus (200) comprises a second feedback DC electrical link (D2), the rectifier module (204) being electrically connected to the second frequency inverter module (201) via the second feedback DC electrical link (D2).

5. The spinning textile machine (100) according to any of the preceding claims, wherein the first frequency inverter module (103) is of the three phase type.

6. The spinning textile machine (100) according to any of the preceding claims, wherein the second frequency inverter module (201) is of the three phase type.

7. The spinning textile machine (100) according to any of the preceding claims, wherein each of the frequency inverter module of the plurality of frequency inverter modules (103) is of the three phase type.

8. The spinning textile machine (100) according to any of the preceding claims, wherein the source of kinetic energy (M) electrically connected to the first frequency inverter module (103) is one of a motor drive, a fan drive, a rotary machine drive.

9. The spinning textile machine (100) according to any of the preceding claims, further comprising a data processing unit (105) electrically connected to the DC power supply bus bar (101), the data processing unit (105) being configured to control the operation of the spinning textile machine (100).

10. The spinning textile machine (100) according to claim 9, wherein the first frequency inverter module (103) is configured to generate an electric signal representative of the detected outage of AC power supply, the first frequency inverter module (103) is configured to provide the data processing unit (105) with said electrical signal representative of the detected outage of power supply.

11. The spinning textile machine (100) according to any of the preceding claims, further comprising a plurality of electronic boards (107) electrically connected to the DC power supply bus bar (101).

12. The spinning textile machine (100) according to claim 11, further comprising a plurality of stepping motor drives (108) electrically connected to the plurality of electronic boards (107).

13. Method for providing a spinning textile machine (100) with an AC backup power supply in the case of an outage of AC power supply, the spinning textile machine (100) comprising an electronic apparatus (200) arranged to electrically connect a DC power supply bus bar (101) of the spinning textile machine (100) to an AC power supply grid (102), the electronic apparatus (200) comprising:
- a first frequency inverter module (103) of a plurality of frequency inverter modules (103) of the spinning textile machine (100);
- a source of kinetic energy (M) of a plurality of sources of kinetic energy (104, M) of the spinning textile machine (100), said source of kinetic energy (M) being electrically connected to the first frequency inverter module (103), the source of kinetic energy (M) being power supplied by the AC electric power grid (102) via the first inverter module (103) ; **characterised in that** the electronic apparatus (200) further comprises:
- a second frequency inverter module (201) electrically connected to the first frequency inverter module (103) via a first DC electrical link (D1) having a first diode (202), the second frequency inverter module (201) being power supplied by the first frequency inverter module (103) via the first DC electrical link (D1) having the diode (202);
- a transformer module (203) and a rectifier module (204), the transformer module (203) being electrically connected to the DC power supply bus bar (101) via the rectifier module (204), the second inverter (201) being electrically connected to the DC power supply bus bar (101) via the transformer module (203) and the rectifier module (204);
in the case of an outage of the AC power supply, the method comprising the steps of:
- recognizing, by the first frequency inverter module (103), the outage of the AC power supply provided by the AC power supply grid (102);
- receiving, by the first frequency inverter module (103), the kinetic power energy generated by the source of kinetic energy (M);
- providing via the first DC electrical link (D1) having the first diode (202), by the first frequency inverter module (103), the second frequency inverter module (201) with the AC backup power supply received from the source of kinetic energy (M).

## Patentansprüche

1. Spinntextilmaschine (100), umfassend:
- eine DC-Stromversorgungssammelschiene (101);
- eine elektronische Vorrichtung (200), die angeordnet ist, um die DC-Stromversorgungssammelschiene (101) elektrisch mit einem AC-Stromversorgungsnetz (102) zu verbinden, wobei die elektronische Vorrichtung (200) angeordnet ist, um die Spinntextilmaschine (100) mit AC-Reservestromzufuhr auch in dem Fall eines Ausfalls der vom AC-Stromversorgungsnetz (102) bereitgestellten AC-Stromversorgung zu versorgen;
- eine Mehrzahl von Frequenzumrichtermodulen (103), die elektrisch mit dem AC-Stromversorgungsnetz (102) verbunden sind;
- eine Mehrzahl von Quellen kinetischer Energie (104, M), wobei jede Quelle kinetischer Energie (M) der Mehrzahl von Quellen kinetischer Energie (104, M) elektrisch mit einem relativen Umrichtermodul (103) der Mehrzahl von Frequenzumrichtermodulen (103) verbunden ist;
wobei die elektronische Vorrichtung (200) umfasst:
- ein erstes Frequenzumrichtermodul (103) der Mehrzahl von Frequenzumrichtermodulen (103);
- eine Quelle kinetischer Energie (M) der Mehrzahl von Quellen kinetischer Energie (104, M), wobei die Quelle kinetischer Energie (M) elektrisch mit dem ersten Frequenzumrichtermodul (103) verbunden ist und die Quelle kinetischer Energie (M) von dem AC-Stromversorgungsnetz (102) über das erste Frequenzumrichtermodul (103) mit Strom versorgt wird;
**dadurch gekennzeichnet, dass** die elektronische Vorrichtung (200) ferner umfasst:
- ein zweites Frequenzumrichtermodul (201), das elektrisch mit dem ersten Frequenzumrichtermodul (103) über eine erste elektrische DC-Verbindung (D1) verbunden ist, die eine erste Diode (202) umfasst, wobei das zweite Frequenzumrichtermodul (201) von dem ersten Frequenzumrichtermodul (103) über die erste elektrische DC-Verbindung (D1), welche die erste Diode (202) umfasst, mit Strom versorgt wird;
- ein Transformatormodul (203) und ein Gleichrichtermodul (204), wobei das Transformatormodul (203) über das Gleichrichtermodul (204) mit der DC-Stromversorgungssammelschiene (101) elektrisch verbunden ist, wobei das zweite Frequenzumrichtermodul (201) über das Transformatormodul (203) und das Gleichrichtermodul (204) mit der DC-Stromversorgungssammelschiene (101) elektrisch verbunden ist,
wobei in dem Falle eines Ausfalls der AC-Stromversorgung, die durch das AC-Stromversorgungsnetz (102) bereitgestellt wird, das erste Frequenzumrichtermodul (103) konfiguriert ist zum:
- Erkennen eines Ausfalls der AC-Stromversorgung durch das AC-Stromversorgungsnetz (102);
- Empfangen einer kinematische Energie, die von der Quelle kinetischer Energie (M) erzeugt wird, als eine AC-Reservestromzufuhr;
- Versorgen, über die erste elektrische DC-Verbindung (D1), welche die erste Diode (202) umfasst, des zweiten Frequenzumrichtermoduls (201) mit der AC-Reservestromzufuhr, die von der Quelle kinetischer Energie (M) empfangen wird.

2. Spinntextilmaschine (100) nach Anspruch 1, wobei das erste Frequenzumrichtermodul (103) ferner konfiguriert ist, das zweite Frequenzumrichtermodul (201) der elektronischen Vorrichtung (200) mit einer DC-Stromversorgung auch in dem Fall keines Ausfalls der AC-Stromversorgung über die erste elektrische DC-Verbindung (D1), welche die erste Diode (202) umfasst, während des normalen Betriebs der Spinntextilmaschine (100) zu versorgen.

3. Spinntextilmaschine (100) nach Anspruch 1, wobei das zweite Frequenzumrichtermodul (201) der elektronischen Vorrichtung (200) mit dem AC-Stromversorgungsnetz (102) elektrisch verbunden ist, wobei das zweite Frequenzumrichtermodul (201) der elektronischen Vorrichtung (200) während des normalen Betriebs der Spinntextilmaschine (100) von dem AC-Stromversorgungsnetz (102) elektrisch versorgt wird.

4. Spinntextilmaschine (100) nach einem der vorhergehenden Ansprüche, wobei die elektronische Vorrichtung (200) eine zweite elektrische Rückkopplungs-DC-Verbindung (D2) umfasst, wobei das Gleichrichtermodul (204) elektrisch mit dem zweiten Frequenzumrichtermodul (201) über die zweite elektrische Rückkopplungs-DC-Verbindung (D2) verbunden ist.

5. Spinntextilmaschine (100) nach einem der vorhergehenden Ansprüche, wobei das erste Frequenzumrichtermodul (103) vom Dreiphasentyp ist.

6. Spinntextilmaschine (100) nach einem der vorhergehenden Ansprüche, wobei das zweite Frequenzumrichtermodul (201) vom Dreiphasentyp ist.

7. Spinntextilmaschine (100) nach einem der vorhergehenden Ansprüche, wobei jedes der Frequenzumrichtermodule der Mehrzahl von Frequenzumrichtermodulen (103) vom Dreiphasentyp ist.

8. Spinntextilmaschine (100) nach einem der vorhergehenden Ansprüche, wobei die Quelle kinetischer Energie (M), die mit dem ersten Frequenzumrichtermodul (103) elektrisch verbunden ist, eine eines Motorantriebs, eines Lüfterantriebs oder eines Rotationsmaschinenantriebs ist.

9. Spinntextilmaschine (100) nach einem der vorhergehenden Ansprüche, ferner umfassend eine Datenverarbeitungseinheit (105), die elektrisch mit der DC-Stromsversorgungssammelschiene (101) verbunden ist, wobei die Datenverarbeitungseinheit (105) konfiguriert ist, den Betrieb der Spinntextilmaschine (100) zu steuern bzw. zu regeln.

10. Spinntextilmaschine (100) nach Anspruch 9, wobei das erste Frequenzumrichtermodul (103) konfiguriert ist, ein elektrisches Signal zu erzeugen, das den erfassten Ausfall der AC-Stromversorgung darstellt, wobei das erste Frequenzumrichtermodul (103) konfiguriert ist, die Datenverarbeitungseinheit (105) mit dem elektrischen Signal zu versorgen, das den erfassten Ausfall der Stromversorgung darstellt.

11. Spinntextilmaschine (100) nach einem der vorhergehenden Ansprüche, ferner umfassend eine Mehrzahl von elektronischen Platinen (107), die elektrisch mit der DC-Stromversorgungssammelschiene (101) verbunden sind.

12. Spinntextilmaschine (100) nach Anspruch 11, ferner umfassend eine Mehrzahl von Schrittmotorantrieben (108), die elektrisch mit der Mehrzahl elektronischer Platinen (107) verbunden sind.

13. Verfahren zum Versorgen einer Spinntextilmaschine (100) mit einer AC-Reservestromzufuhr in dem Fall eines Ausfalls der AC-Stromversorgung, wobei die Spinntextilmaschine (100) eine elektronische Vorrichtung (200) umfasst, die angeordnet ist, um eine DC-Stromversorgungssammelschiene (101) der Spinntextilmaschine (100) elektrisch mit einem AC-Stromversorgungsnetz (102) zu verbinden,
wobei die elektronische Vorrichtung (200) umfasst:
- ein erstes Frequenzumrichtermodul (103) einer Mehrzahl von Frequenzumrichtermodulen (103) der Spinntextilmaschine (100);
- eine Quelle kinetischer Energie (M) einer Mehrzahl von Quellen kinetischer Energie (104, M) der Spinntextilmaschine (100), wobei die Quelle kinetischer Energie (M) elektrisch mit dem ersten Frequenzumrichtermodul (103) verbunden ist, wobei die Quelle kinetischer Energie (M) von dem AC-Stromversorgungsnetz (102) über das erste Frequenzumrichtermodul (103) mit Strom versorgt wird;
**dadurch gekennzeichnet, dass** die elektronische Vorrichtung (200) ferner umfasst:
- ein zweites Frequenzumrichtermodul (201), das elektrisch mit dem ersten Frequenzumrichtermodul (103) über eine erste elektrische DC-Verbindung (D1) verbunden ist, die eine erste Diode (202) aufweist, wobei das zweite Frequenzumrichtermodul (201) von dem ersten Frequenzumrichtermodul (103) über die erste elektrische DC-Verbindung (D1), welche die erste Diode (202) aufweist, mit Strom versorgt wird;
- ein Transformatormodul (203) und ein Gleichrichtermodul (204), wobei das Transformatormodul (203) über das Gleichrichtermodul (204) mit der DC-Stromversorgungssammelschiene (101) elektrisch verbunden ist, wobei das zweite Frequenzumrichtermodul (201) über das Transformatormodul (203) und das Gleichrichtermodul (204) mit der DC-Stromversorgungssammelschiene (101) elektrisch verbunden ist,
wobei in dem Falle eines Ausfalls der AC-Stromversorgung das Verfahren die Schritte umfasst:
- Erkennen, durch das erste Frequenzumrichtermodul (103), des Ausfalls der AC-Stromversorgung, die durch das AC-Stromversorgungsnetz (102) bereitgestellt wird;
- Empfangen, durch das erste Frequenzumrichtermodul (103), der kinematischen Energie, die von der Quelle kinetischer Energie (M) erzeugt wird;
- Versorgen, durch das erste Frequenzumrichtermodul (103) über die erste elektrische DC-Verbindung (D1), welche die erste Diode (202) aufweist, des zweiten Frequenzumrichtermoduls (201) mit der AC-Reservestromzufuhr, die von der Quelle kinetischer Energie (M) empfangen wird.

## Revendications

1. Machine textile à filer (100) comprenant :
- une barre omnibus d'alimentation de courant continu (101) ;
- un appareil électronique (200) conçu pour connecter électriquement la barre omnibus d'alimentation de courant continu (101) à un réseau d'alimentation de courant alternatif (102), l'appareil électronique (200) étant conçu pour fournir à la machine textile à filer (100) une alimentation de courant alternatif de secours également en cas d'une panne d'alimentation de courant alternatif fournie par le réseau d'alimentation de courant alternatif (102) ;
- une pluralité de modules convertisseurs de fréquence (103) connectés électriquement au réseau d'alimentation de courant alternatif (102) ;
- une pluralité de sources d'énergie cinétique (104, M), chaque source d'énergie cinétique (M) de ladite pluralité de sources d'énergie cinétique (104, M) étant connectée électriquement à un module convertisseur associé (103) de ladite pluralité de modules convertisseurs de fréquence (103) ;
l'appareil électronique (200) comprend :
- un premier module convertisseur de fréquence (103) de ladite pluralité de modules convertisseurs de fréquence (103) ;
- une source d'énergie cinétique (M) de ladite pluralité de sources d'énergie cinétique (104, M), ladite source d'énergie cinétique (M) étant connectée électriquement au premier module convertisseur de fréquence (103), la source d'énergie cinétique (M) étant alimentée en courant par le réseau de puissance électrique de courant alternatif (102) via le premier module convertisseur de fréquence (103) ;
**caractérisée en ce que** l'appareil électronique (200) comprend en outre :
- un second module convertisseur de fréquence (201) connecté électriquement au premier module convertisseur de fréquence (201) via une première liaison électrique en courant continu (D1) comprenant une première diode (202), le second module convertisseur de fréquence (201) étant alimenté en courant par le premier module convertisseur de fréquence (103) via la première liaison électrique en courant continu (D1) comprenant la première diode (202) ;
- un module transformateur (203) et un module redresseur (204), le module transformateur (203) étant connecté électriquement à la barre omnibus d'alimentation de courant continu (101) via le module redresseur (204), le second module convertisseur de fréquence (201) étant connecté électriquement à la barre omnibus d'alimentation de courant continu (101) via le module transformateur (203) et le module redresseur (204),
en cas d'une panne de l'alimentation de courant alternatif fournie par le réseau d'alimentation de courant alternatif (102), le premier module convertisseur de fréquence (103) étant configuré pour :
- détecter une panne de l'alimentation de courant alternatif par le réseau d'alimentation de courant alternatif (102) ;
- recevoir une énergie cinétique générée par la source d'énergie cinétique (M) en tant qu'alimentation de courant alternatif de secours ;
- fournir, via la première liaison électrique en courant continu (Dl) comprenant la première diode (202), au second module convertisseur de fréquence (201) l'alimentation de courant alternatif de secours reçue à partir de la source d'énergie cinétique (M).

2. Machine textile à filer (100) selon la revendication 1, dans laquelle le premier module convertisseur de fréquence (103) est en outre configuré pour fournir au second module convertisseur de fréquence (201) de l'appareil électronique (200) une alimentation de courant continu également en cas d'absence de panne l'alimentation de courant alternatif, via la première liaison électrique en courant continu (D1) comprenant la première diode (202), au cours du fonctionnement normal de la machine textile à filer (100).

3. Machine textile à filer (100) selon la revendication 1, dans laquelle le second module convertisseur de fréquence (201) de l'appareil électronique (200) est connecté électriquement au réseau d'alimentation de courant alternatif (102), le second module convertisseur de fréquence (201) de l'appareil électronique (200) étant alimenté électriquement par le réseau d'alimentation de courant alternatif (102) au cours du fonctionnement normal de la machine textile à filer (100).

4. Machine textile à filer (100) selon l'une quelconque des revendications précédentes, dans laquelle l'appareil électronique (200) comprend une seconde liaison électrique de rétroaction en courant continu (D2), le module redresseur (204) étant connecté électriquement au second module convertisseur de fréquence (201) via la seconde liaison électrique de rétroaction en courant continu (D2).

5. Machine textile à filer (100) selon l'une quelconque des revendications précédentes, dans laquelle le premier module convertisseur de fréquence (103) est du type triphasé.

6. Machine textile à filer (100) selon l'une quelconque des revendications précédentes, dans laquelle le second module convertisseur de fréquence (201) est du type triphasé.

7. Machine textile à filer (100) selon l'une quelconque des revendications précédentes, dans laquelle chacun des modules convertisseurs de fréquence de la pluralité de modules convertisseurs de fréquence (103) est du type triphasé.

8. Machine textile à filer (100) selon l'une quelconque des revendications précédentes, dans laquelle la source d'énergie cinétique (M) connectée électriquement au premier module convertisseur de fréquence (103) est l'un d'un élément d'entraînement de moteur, d'un élément d'entraînement de soufflante, d'un élément d'entraînement de machine rotative.

9. Machine textile à filer (100) selon l'une quelconque des revendications précédentes, comprenant en outre une unité de traitement de données (105) connectée électriquement à la barre omnibus d'alimentation de courant continu (101), l'unité de traitement de données (105) étant configurée pour commander le fonctionnement de la machine textile à filer (100) .

10. Machine textile à filer (100) selon la revendication 9, dans laquelle le premier module convertisseur de fréquence (103) est configuré pour générer un signal électrique représentatif de la panne détectée d'alimentation de courant alternatif, le premier module convertisseur de fréquence (103) est configuré pour fournir à l'unité de traitement de données (105) ledit signal électrique représentatif de la panne détectée d'alimentation de courant.

11. Machine textile à filer (100) selon l'une quelconque des revendications précédentes, comprenant en outre une pluralité de cartes électroniques (107) connectées électriquement à la barre omnibus d'alimentation de courant continu (101).

12. Machine textile à filer (100) selon la revendication 11, comprenant en outre une pluralité d'éléments d'entraînement de moteur pas à pas (108) connectés électriquement à la pluralité de cartes électroniques (107).

13. Procédé pour fournir à une machine textile à filer (100) une alimentation de courant alternatif de secours en cas d'une panne d'alimentation de courant alternatif, la machine textile à filer (100) comprenant un appareil électronique (200) conçu pour connecter électriquement une barre omnibus d'alimentation de courant continu (101) de la machine textile à filer (100) à un réseau d'alimentation de courant alternatif (102), l'appareil électronique (200) comprenant :
- un premier module convertisseur de fréquence (103) d'une pluralité de modules convertisseurs de fréquence (103) de la machine textile à filer (100) ;
- une source d'énergie cinétique (M) d'une pluralité de sources d'énergie cinétique (104, M) de la machine textile à filer (100), ladite source d'énergie cinétique (M) étant connectée électriquement au premier module convertisseur de fréquence (103), la source d'énergie cinétique (M) étant alimentée en courant par le réseau électrique de courant alternatif (102) via le premier module convertisseur (103) ;
**caractérisé en ce que** l'appareil électronique (200) comprend en outre :
- un second module convertisseur de fréquence (201) connecté électriquement au premier module convertisseur de fréquence (103) via une première liaison électrique en courant continu (D1) ayant une première diode (202), le second module convertisseur de fréquence (201) étant alimenté en courant par le premier module convertisseur de fréquence (103) via la première liaison électrique en courant continu (D1) ayant la diode (202) ;
- un module transformateur (203) et un module redresseur (204), le module transformateur (203) étant connecté électriquement à la barre omnibus d'alimentation de courant continu (101) via le module redresseur (204), le second convertisseur (201) étant connecté électriquement à la barre omnibus d'alimentation de courant continu (101) via le module transformateur (203) et le module redresseur (204) ;
en cas d'une panne de l'alimentation de courant alternatif, le procédé comprenant les étapes de :
- reconnaissance, par le premier module convertisseur de fréquence (103), de la panne de l'alimentation de courant alternatif fournie par le réseau d'alimentation de courant alternatif (102) ;
- réception, par le premier module convertisseur de fréquence (103), de l'énergie cinétique générée par la source d'énergie cinétique (M) ;
- fourniture via la première liaison électrique en courant continu (D1) ayant la première diode (202), par le premier module convertisseur de fréquence (103), au second module convertisseur de fréquence (201) de l'alimentation de courant alternatif de secours reçue de la source d'énergie cinétique (M).
